# EUROPEAN PATENT APPLICATION

(11) **EP 2 201 871 A1**
(43) Date of publication of application: **30.06.2010**
(21) Application number: 08704053.1
(22) Date of filing: 29.01.2008
(51) Int. Cl.: A47J 31/06, A47J 31/02

(54) **BEVERAGE EXTRACTION APPARATUS**

(30) Priority: 21.09.2007 JP 2007273149
(71) Applicant: Finesky CO., LTD., 2328-2 Shimokoyama Shimotsuke-shi Tochigi 329-0502 (JP)
(72) Inventor: KOKATSU, Tatsuya, Shimotsuke-shi Tochigi 329-0502 (JP); TAKAIWA, Mitsuyo, Shimotsuke-shi Tochigi 329-0502 (JP)
(74) Representative: Jolly, Mark Edward
(86) International application number: PCT/JP2008/051244
(87) International publication number: WO 2009/037868

(57) **Abstract**

The present invention provides a drink extracting apparatus which can obtain a tasty drink.

A drink extracting apparatus 1 includes a cup body 4 having a cup shape. The cup body 4 has an upper opening 2 for supplying a drinkmaterial and a liquid anda lower opening 3 for discharging a drink obtained by being extracted from the drink material. Inside a lower portion of the cup body 4, a filter body 5 being convex upward is removably disposed. The filter body 5 covers the upper side of the lower opening 3 of the cup body 4, and traps the drink material and allows the drink to pass through to the lower opening 3 side.

## Description

### TECHNICAL FIELD

The present invention relates to a drink extracting apparatus capable of obtaining a tasty drink.

### BACKGROUND ART

Conventionally, for example, a drink extracting apparatus described in Patent document 1 listed below is known.

This conventional drink extracting apparatus includes a cup body which has an upper opening for supplying a drinkmaterial such as coffee grounds and a liquid such as boiling water, and a lower opening for discharging a drink such as coffee as an extraction liquid obtained by being extracted from the drink material, and a filter body which is disposed inside this cup body and covers the upper side of the lower opening, and traps the drink material and allow the drink to pass through. The filter body has a mesh-like filter surface positioned along a horizontal plane inside the lower portion of the cup body.
Patent document 1: Japanese Laid-open Patent Publication No.

### DISCLOSURE OF THE INVENTION

### Problem to be Solved by the Invention

However, in the conventional drink extracting apparatus, the filter body has a filter surface positioned along a horizontal plane inside the lower portion of the cup body, so that the contact efficiency between the drink material and the liquid inside the cup body may be deteriorated, and there is a possibility that the extract of the drink is not sufficiently extracted from the drink material and the drink may not have much taste.

The present invention has been made in view of these circumstances, and an object thereof is to provide a drink extracting apparatus capable of obtaining a tasty drink.

### Means for Solving the Problem

A drink extracting apparatus according to Claim 1 of the invention includes a cup body which has an upper opening for supplying a drink material and a liquid and a lower opening for discharging a drink obtained by being extracted from the drink material; and a filter body being convex upward which is disposed inside this cup body, covers the upper side of the lower opening so as to trap the drink material and allow the drink to pass through.

According to a drink extracting apparatus of Claim 2 of the invention, in the drink extracting apparatus of Claim 1 of the invention, the cup body has an inner wall face having a substantially inverted cone shape, and the filter body has a filter surface which faces the inner wall face and has a substantially cone shape whose central axis line matches the central axis line of the inner wall face.

According to a drink extracting apparatus of Claim 3 of the invention, in the drink extracting apparatus of Claim 1 or 2 of the invention, the cup body has a cup member and an attachable and detachable member which is attachable to and detachable from the cup member, and by attaching the attachable and detachable member to the cup member, the filter body is positioned and fixed inside the cup body, and by detaching the attachable and detachable member from the cup member, the filter body is taken out of the cup body.

According to a drink extracting apparatus of Claim 4 of the invention, in the drink extracting apparatus of any one of Claims 1 to 3 of the invention, the drink extracting apparatus includes a valve body which opens the lower opening by moving up with respect to the cup body, and closes the lower opening by moving down with respect to the cup body, and an urging body which urges this valve body downward.

According to a drink extracting apparatus of Claim 5 of the invention, in the drink extracting apparatus of Claim 4 of the invention, the drink extracting apparatus includes a cup receiver on which the cup body is set, and the cup receiver has a valve body push-up portion which holds an open state of the lower opening by moving up the valve body against the urging force of the urging body when the cup body is set, and a drink passing opening through which a drink from the lower opening passes.

According to a drink extracting apparatus of Claim 6 of the invention, in the drink extracting apparatus of Claim 5 of the invention, the cup receiver is a storing container which receives the drink from the lower opening of the cup body through the drink passing opening and stores it.

According to a drink extracting apparatus of Claim 7 of the invention, in the drink extracting apparatus of Claim 6 of the invention, the storing container includes: a drink inlet as the drink passing opening; an inlet lid which opens and closes this drink inlet; a drink outlet; and an outlet lid which opens and closes this drink outlet.

According to a drink extracting apparatus of Claim 8 of the invention, in the drink extracting apparatus of Claim 5 of the invention, the cup receiver is a receiving base which can be placed on a drink container, and when the receiving base is placed on the drink container and the cup body is set onto the placed receiving base, the drink from the lower opening of the cup body flows into the drink container through the drink passing opening.

According to a drink extracting apparatus of Claim 9 of the invention, in the drink extracting apparatus described in any one of Claims 1 to 8, the drink extracting apparatus includes a stand body for supporting the cup body, and the stand body can be used as a cover for preventing dust adhesion to the filter while keeping.

### Effects of the Invention

According to Claim 1 of the invention, the filter body has a shape being convex and covering the upper side of the lower opening of the cup body, so that the contact efficiency between the drink material and the liquid is improved, the extract of the drink can be sufficiently extracted from the drink material, and accordingly, a tasty drink can be obtained.

According to Claim 2 of the invention, the cup body has an inner wall face having a substantially inverted cone shape, and the filter body has a filter surface having a substantially cone shape which faces the inner wall face and whose central axis line matches the central axis line of the inner wall face, so that the contact efficiency between the drink material and the liquid can be further improved.

According to Claim 3 of the invention, by attaching the attachable and detachable member to the cup member, the filter body can be easily positioned and fixed inside the cup body, and by detaching the attachable and detachable member from the cup member, the filter body can be easily taken out of the cup body.

According to Claim 4 of the invention, the lower opening can be opened by moving down the valve body by the urging force of the urging body, and the lower opening can be closed by moving up the valve body against the urging force of the urging body.

According to Claim 5 of the invention, an open state of the lower opening can be held by moving up the valve body by the valve body push-up portion by setting the cup body on the cup receiver, and a drink from the opened lower opening can be supplied to the drink passing opening.

According to Claim 6 of the invention, a drink from the lower opening of the cup body can be stored in the storing container as a cup receiver.

According to Claim 7 of the invention, the drink inlet can be properly opened and closed by the inlet lid, while the drink outlet can be properly opened and closed by the outlet lid, and for example, by closing the drink inlet and opening the drink outlet, the drink can be directly drunk through the open drink outlet.

According to Claim 8 of the invention, by placing a receiving base as a cup receiver on the drink container and setting the cup body on the receiving base, the drink from the lower opening of the cup body can be made to flow into the drink container through the drink passing opening.

According to Claim 9 of the invention, while the cup body canbe supported by the stand body when brewing the drinkmaterial, the stand body can be used as a cover for preventing dust adhesion to the filter body while keeping.

### BRIEF DESCRIPTION OF THE DRAWINGS

Fig. 1 is a perspective view of a drink extracting apparatus of an embodiment of the present invention;
Fig. 2 is an exploded perspective view of the same drink extracting apparatus;
Fig. 3 is a sectional view of the same drink extracting apparatus;
Fig. 4 is a sectional view showing a state where a lower opening of the same drink extracting apparatus is opened;
Fig. 5 is a sectional view showing a state where the lower opening of the same drink extracting apparatus is closed;

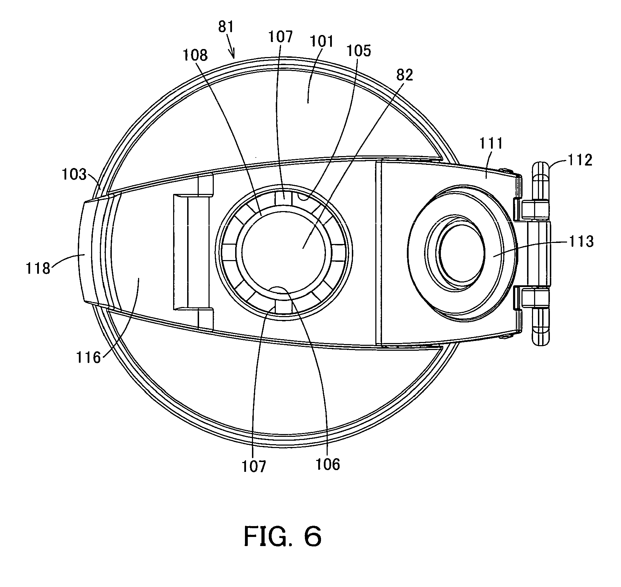

Fig. 6 is a plan view of a storing container of the same drink extracting apparatus;
Fig. 7(a) is a perspective view showing a state before a cup body is placed on a stand body, and Fig. 7(b) is a perspective view showing a state where the cup body is placed on the stand body;
Fig. 8 is a perspective view showing a state where the same stand body is housed in the cup body;
Fig. 9(a) to Fig. 9(e) are explanatory views in a case where coffee is made by using the drink extracting apparatus;
Fig. 10 is a perspective view of a cup receiver of a drink extracting apparatus of another embodiment of the present invention;
Fig. 11 is a perspective view showing a state where a cup body is placed on the same cup receiver; and
Fig. 12 is a sectional view of the same cup receiver.

### DESCRIPTION OF THE REFERENCE NUMERALS

- 1: Drink extracting apparatus
- 2: Upper opening
- 3: Lower opening
- 4: Cup body
- 5: Filter body
- 7: Cup member
- 8: Attachable and detachable member
- 17: Inner wall face
- 41: Filter surface
- 61: Valve body
- 62: Urging body
- 81: Storing container as cup receiver
- 82: Drink inlet as drink passing opening
- 102: Drink outlet
- 108: Valve body push-up portion
- 111: Inlet lid
- 116: Outlet lid
- 121: Stand body
- 131: Receiving base as cup receiver
- 132: Drink container
- 133: Valve body push-up portion
- 134: Drink passing opening
- "a": Drink material

### BEST MODE FOR CARRRYING OUT THE INVENTION

An embodiment of a drink extracting apparatus of the present invention will be described with reference to the drawings.

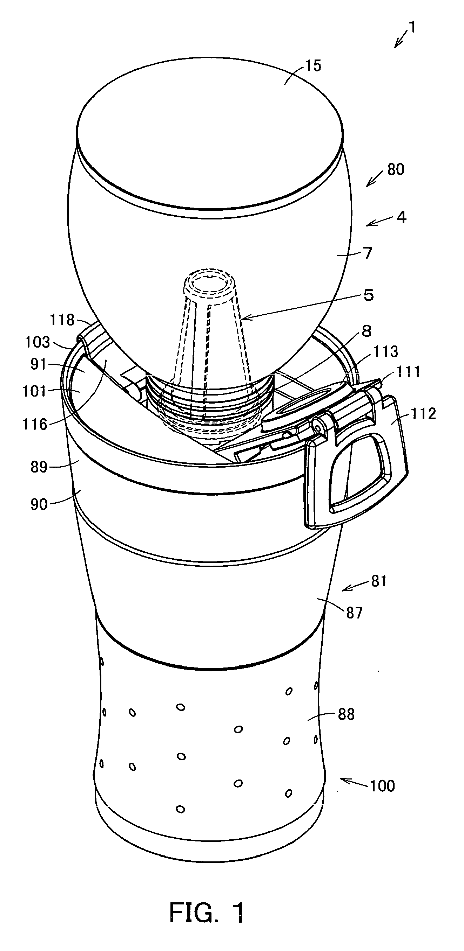

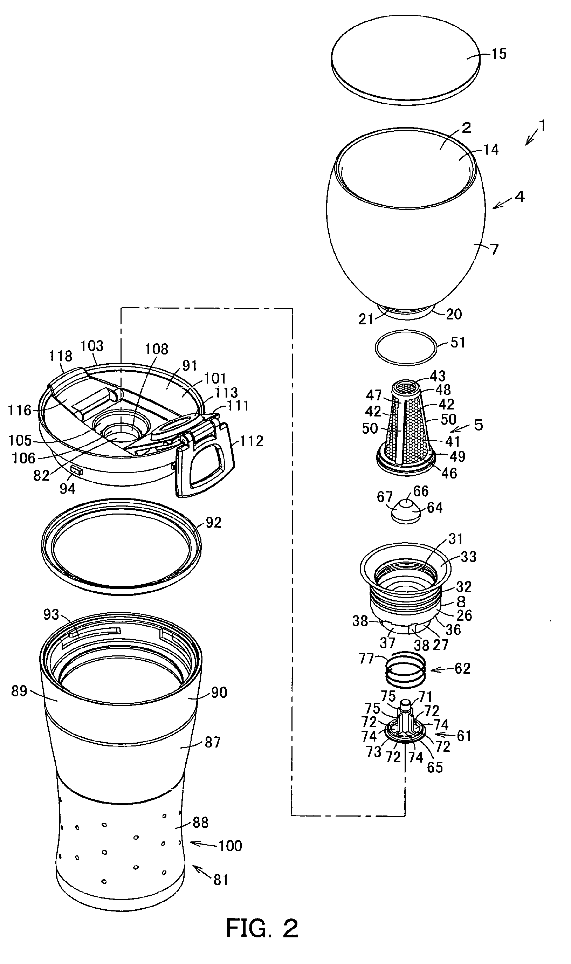

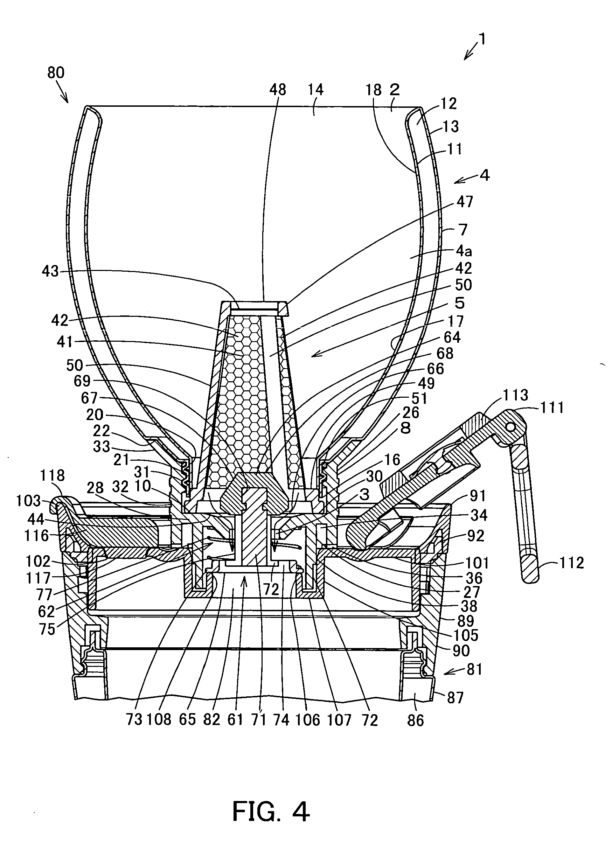

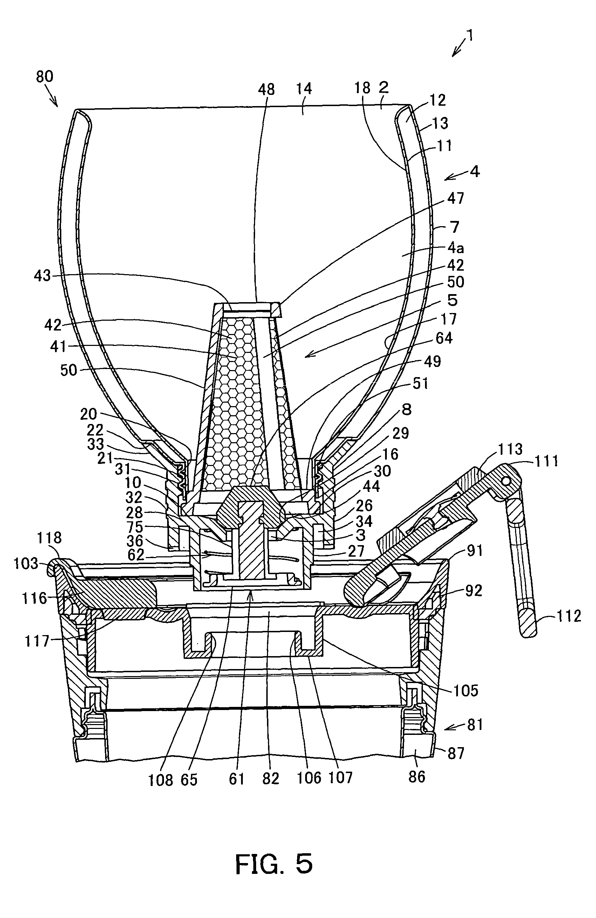

In Fig. 1 to Fig. 5, the reference numeral 1 denotes a drink extracting apparatus, and this drink extracting apparatus 1 is for obtaining a drink as an extract liquid of, for example, coffee, Japanese tea, Chinese tea, black tea, or the like by pouring a liquid such as boiling water or cool water on a drink material "a" such as coffee grounds or tea leaves.

The drink extracting apparatus 1 includes a cup body 4 having a substantially cup-shaped heat-insulated double structure having an upper opening 2 for supplying the drink material "a" and the liquid in its upper surface and a lower opening 3 for discharging a drink obtained by being extracted from the drink material "a" in its lower surface; and a filter body 5 having a mountain shape, that is, a shape being convex upward which is removably disposed inside the lower portion of the cup body 4 and covers the upper side of the entire lower opening 3, and traps the drink material "a" and allows the drink to pass through toward the lower opening 3 side.

The cup body 4 includes a cup member 7 made of metal having a substantially cup shape whose upper and lower surfaces are open, and an attachable and detachable member 8 as a joint which is made of a synthetic resin and has a substantially cylindrical shape whose upper and lower surfaces are open, and is attachable by screw engagement and detachable by screw disengagement from a lower portion of the cup member 7.

The cup member 7 has a heat insulating double structure having a space (preferably, vacuum portion) 13 between an inner cylinder 11 and an outer cylinder 12, and has a shape which is curved to become convex outward and swells outward at the vertically central portion. In other words, for example, the cup member 7 is formed into a cup shape rotationally symmetric about a central axis line along the vertical direction passing the center of the cup member 7.

In the upper surface of the cup member 7, a circular upper surface opening 14 is formed, and this upper surface opening 14 forms the upper opening 2 of the cup body 7, and this upper opening 2 is opened and closed by a disk-shaped lid 15 made of a synthetic resin attachable to and detachable from the upper end portion of the cup member 7. In the lower surface of the cup member 7, a lower surface opening 16 having a circular shape smaller than that of the upper surface opening 14 is formed.

On the lower inner peripheral surface of the cup member 7, an inner wall face 17 having a substantially inverted truncated circular cone shape which is rotationally symmetric about a central axis line along the vertical direction and becomes smaller in diameter downward. The inner wall face 17 is tapered downward and curved to become convex outward is formed. On the upper inner peripheral surface of the cup member 7, an upper inner wall face 18 having a substantially truncated circular cone shape which is rotationally symmetric about a central axis line along the vertical direction and becomes slightly smaller in diameter upward is formed. The cup member 7 has a lower end cylindrical portion 20 having a substantially cylindrical shape on an lower end, and on the outer peripheral surface of this lower end cylindrical portion 20, a male screw 21 is formed.

The outer peripheral surface of the cup member 7 has a substantially inverted circular cone shape on its lower portion similar to the inner peripheral surface of the cup member 7, and has a substantially truncated circular cone shape on its upper portion. On the lower portion outer peripheral side of the cup member 7, an annular hollow 22 is formed.

The attachable and detachable member 8 has a double cylindrical shape including an outer cylindrical portion 26 and an inner cylindrical portion 27 which are cylindrical and positioned concentric with each other. The attachable and detachable member 8 has an annular plate 28 having a circular annular shape forming a horizontal bottom plate 10 of the cup body 4, and at the central portion of this annular plate 28, a lower opening 3 which is a circular through hole smaller than the upper opening 2 of the cup body 4 is made through the upper and lower surfaces of the annular plate 28. On the inner upper surface of the annular plate 2 8 , a valve seat 2 9 having a truncated circular cone shape which becomes smaller in diameter downward is formed. On the outer upper surface of the annular plate 28, a horizontal filter support surface 30 which supports the filter body 5 is formed.

To the outer peripheral end portion of the annular plate 28, the substantially central portion which is the middle portion in the vertical direction of the outer cylindrical portion 26 is joined integrally, and on the upper inner peripheral surface of this outer cylindrical portion 26, a female screw 31 which is engaged by screwing with the male screw 21 of the lower end cylindrical portion 20 is formed. On the outer peripheral surface of the outer cylindrical portion 26, a spiral groove 32 is formed. From the upper end portion of the outer cylindrical portion 26, an upper end cylindrical portion 33 having a truncated circular cone shape which becomes larger in diameter upward in relation to the annular hollow 22 projects integrally upward, and this upper end cylindrical portion 33 is positioned at the annular hollow 22 and has an outer peripheral surface positioned continuously to the outer peripheral surface of the cup member 7. On the lower surface of the outer cylindrical portion 26, a plurality of notches 36 as air grooves for air passing are formed at even intervals in the circumferential direction of the outer cylindrical portion 26.

From the lower surface of the substantially central portion which is a middle portion in a radial direction of the annular plate 28, the inner cylindrical portion 27 projects integrally downward, and the lower end portion of this inner cylindrical portion 27 is positioned lower than the lower end portion of the outer cylindrical portion 26. Between the lower inner peripheral surface of the outer cylindrical portion 26 and the upper outer peripheral surface of the inner cylindrical portion 27, a space 34 is formed. The vertical length of the outer cylindrical portion 26 is longer than that of the inner cylindrical portion 27.

The filterbody5 is formed intoahollowconvexmountain shape projecting upward from the horizontal bottom plate 10 of the cup body 4, that is, for example, a truncated circular cone shape having a flat horizontal upper surface, and is disposed inside the lower portion of the inner space 4a of the cup body 4. The circular lower surface of the filter body 5 is substantially the same in size as the bottom plate 10 of the cup body 4.

The filter body 5 is separated from and opposed to the inner wall face 17 of the cup body 4. And a substantially truncated circular cone shape whose central axis line along the vertical direction passing through the center of the filter body 5 matches the central axis line along the vertical direction of the inner wall face 17. That is, for example, the filter body 5 has a mesh-like filter surface 41 having a substantially cone shape on the peripheral surface. This filter surface 41 is formed by substantially trapezoid curved filter surfaces 42 which are, for example, three-divided. The filter body 5 has a mesh-like circular upper filter surface 43 on its upper surface, and this upper filter surface 43 is positioned at the substantially central position in the vertical direction of the inner space 4a of the cup body 4. Further, the filter body 5 has a circular opening 44 larger than the lower opening 3 of the cup body 4 and opposed proximally to the lower opening 3.

The filter surface 41 and the upper filter surface 43 are both formed by a mesh material 46 such as a filter mesh made of metal, and this mesh material 46 is held by a mesh holding member 47 made of a synthetic resin. The mesh holding member 47 is formed by an upper annular portion 48 having a circular annular shape, a lower annular portion 49 having a circular annular shape larger than the upper annular portion 48, and a plurality of, for example, three bar-like joints 50 which join the upper annular portion 48 and the lower annular portion 49 integrally. The outer diameter of the lower annular portion 49 of the filter body 5, that is, the outer diameter of the lower end portion of the filter body 5 is slightly shorter than the inner diameter of the outer cylindrical portion 26 of the attachable and detachable member 8 of the cup body 4, and the lower end portion of the filter body 5 can be fitted with play to the inside of the outer cylindrical portion 26 of the attachable and detachable member 8.

To attach the filter body 5 to the cup body 4, first, the lower end portion of the filter body 5 is inserted into and fitted with play to the inside of the outer cylindrical portion 26 of the attachable and detachable member 8, and the lower surface of the lower annular portion 49 of the filter body 5 is placed on the filter support surface 30 of the annular plate 28 of the attachable and detachable member 8. Then, the filter body 5 is inserted into the cup member 7 from the lower surface opening 16 of the cup member 7, the attachable and detachable member 8 is rotated in a fastening direction into the cup member 7 to fit the male screw 21 and the female screw 31 by screwing, and the attachable and detachable member 8 is thereby attached to the lower outer peripheral side of the cup member 7 via a packing 51. When the attachable and detachable member 8 is thus fitted by screwing to the cup member 7, the lower annular portion 49 of the filter body 5 is sandwiched from above and below between the lower end portion of the cup member 7 and the filter support surface 30 of the annular plate 28 of the attachable and detachable member 8, and the filter body 5 is positioned and fixed at a predetermined position inside the lower portion of the cup body 4.

To remove the f i lter body 5 from the cup body 4, the attachable and detachable 8 is rotated in an unfastening direction with respect to the cup member 7, and the screw fitting between the male screw 21 and the female screw 31 is thereby released and the attachable and detachable member 8 is detached from the cup member 7. When the attachable and detachable member 8 is thus detached from the cup member 7, the filter body 5 is taken out of the inside of the lower portion of the cup body 4 while placed on the filter support surface 30 of the annular plate 28 of the attachable and detachable member 8.

The drink extracting apparatus 1 includes a valve body 61 which opens the lower opening 3 by separating from the valve seat 29 by moving up with respect to the cup body 4 and closes the lower opening 3 by coming into close contact with the valve seat 29 by moving down with respect to the cup body 4, and an urging body 62 which makes the valve body 61 close the lower opening 3 by urging the valve body 61 downward.

The valve body 61 includes a valve member 64 made of rubber and positioned inside the lower portion of the filter body 5, and a valve holding member 65 made of a synthetic resin for holding this valve member 64. The valve member 64 has a substantially truncated circular cone shape, and has a horizontal flat surface 66 on the upper surface, a truncated circular cone surface 67 on the peripheral surface, and an inverted truncated circular cone surface 68 which comes into contact with the valve seat 29, on the lower surface. In the valve member 64, a hole 69 opened downward is formed.

The valve holding member 65 includes a vertical shaft portion 71 to be inserted through the lower opening 3 of the cup body 4 and a circular annular portion 73 joined integrally to the lower end portion of the shaft portion 71 via a plurality of, for example, four bar-like joints 72, and spaces 74 are formed between the lower end portion of the shaft portion 71 and the annular portion 73. The outer diameter of the annular portion 73 is slightly shorter than the inner diameter of the inner cylindrical portion 27 of the attachable and detachable member 8, and the annular portion 73 is movable vertically with respect to the inner cylindrical portion 27 inside the inner cylindrical portion 27, and is positioned at the inner side of the lower end portion of the attachable and detachable member 8 in a state where the valve member 64 is in close contact with the valve seat 29. On the outer peripheral surface of the shaft portion 71, a guide plate 75 long vertically is provided integrally so as to project in four directions. The upper end portion of the shaft portion 71 of the valve holding member 65 is fittedintoahole 69 of thevalvemember 64, and accordingly, the valve member 64 is removably attached to the valve holding member 65.

The urging body 62 is formed into a coil spring 77 which is, for example, a cylindrical elastic member, and this coil spring 77 is provided in a compressed state between the lower surface of the bottom plate 10 of the cup body 4 and the upper surface of the annular portion 73 of the valve body 61.

The cup body 4, the filter body 5, the valve body 61, and the urging body 62 form a percolating cup 80.

Further, the drink extracting apparatus 1 includes a storing container 81 that is a cup receiver as a server container which receives a cup body 4 placed on its upper surface and removably sets and receives a drink from the lower opening 3 of the cup body 4 through a drink inlet 82 as a drink passing opening and stores it.

The storing container 81 has a metal-made container member 87 having a heat insulating double structure which has a space (preferably, vacuum space) 86 between an inner cylinder 84 and an outer cylinder 85 and has a substantially bottomed cylindrical shape. The lower outer peripheral surface and the lower surface of the container member 87 are covered by a cover member 88 made of rubber.

To the upper end portion of the container member 87, a cylindrical member 90 having a substantially cylindrical shape forming a visible portion 89 through which a drink stored in the storing container 81 is visible from the outside of the storing container 81 is fixed. The cylindrical member 90 is made of, for example, a transparent or semitransparent synthetic resin. To the upper end portion of the cylindrical member 90, a substantially circular plate-like lid member 91 made of a synthetic resin which opens and closes the upper surface opening of the cylindrical member 90 is attached via a packing 92. The lid member 91 is attachable to and detachable from the upper end portion outer peripheral side of the cylindrical member 90, and engagement grooves 93 are formed on the inner peripheral surface of the cylindrical member 90, and engagement convex portions 94 which engage with the engagement grooves 93 are formed on the outer peripheral surface of the lid member 91. The container member 87, the cover member 88, and the cylindrical member 90 form a container main body 100.

The lid member 91 has a substantially circular plate-like lid main body plate 101, and at the central portion of the lid main body plate 101, a circular drink inlet 82 for receiving a drink is formed through the upper and lower surfaces, and near the outer peripheral portion of the lid main body plate 101, a slot-like drink outlet 102 for discharging a drink is formed through the upper and lower surfaces. The outer peripheral end portion of the lid main body plate 101 is provided integrally with a projecting portion 103 projecting upward.

From a portion facing the drink inlet 82 in the lid main bodyplate 101, the cylindrical portion 105 the upper and lower surfaces of which open project integrally downward. To the lower end portion of inner peripheral surface of the cylindrical portion 105, an inner cylindrical portion 106 as a ring-shaped rib whose upper and lower surfaces are open is joined integrally via a plurality of, for example, eight plates 107 as support ribs.

On the inner cylindrical portion 106, a valve body push-up portion 108 which moves up the valve body 61 against the urging force of the urging body 62 and maintains an open state of the lower opening 3 when the cup body 4 is set onto the storing container 81 is formed. In other words, when the inner cylindrical portion 27 of the attachable and detachable member 8 of the cup body 4 is inserted between the cylindrical portion 105 and the inner cylindrical portion 106 of the lid member 91 and fitted with play into the cylindrical portion 105 concentrically, and the lower surface of the outer cylindrical portion 26 of the attachable and detachable member 8 is placed on the upper surface of the lid main body plate 101, that is, on the upper surface of the storing container 81, the valve body 61 is pushed up by the valve body push-up portion 108 and the lower opening 3 of the cup body 4 opens. When the cup body 4 is lifted from the upper surface of the storing container 81, the valve body 61 is moved down with respect to the cup body 4 by the urging force of the urging body 62, and this valve body 61 closes the lower opening 3.

To the outer peripheral surface of the inner cylindrical portion 2 7 of the attachable and detachable member 8, a plurality of concave portions 37 which are passage grooves for air passage and a plurality of convex portions 38 as connecting ribs which come into contact with the inner peripheral surface of the cylindrical portion 105 of the lid member 91 are formed.

On the lid main body plate 101, an inlet lid 111 which opens and closes the drink inlet 82 is provided so as to turn, and on the inlet lid 111, a finger-hook ring 112 having a substantially rectangular annular shape on which a finger is hooked when turning the inlet lid 111 is provided so as to turn. On the inlet lid 111, a close contact portion 113 made of rubber which comes into close contact with a surface of the lid main body plate 101 facing the drink inlet 82 is provided.

Further, on the lid main body plate 101, an outlet lid 116 which opens and closes the drink outlet 102 is provided so as to turn, and on this outlet lid 116, a close contact portion 117 made of rubber which comes into close contact with a face of the lid main body plate 101 facing the drink outlet 102 is provided. The outlet lid 116 is provided integrally with a finger-hook portion 118 which is latched on the projecting portion 103 when closing the drink outlet 102.

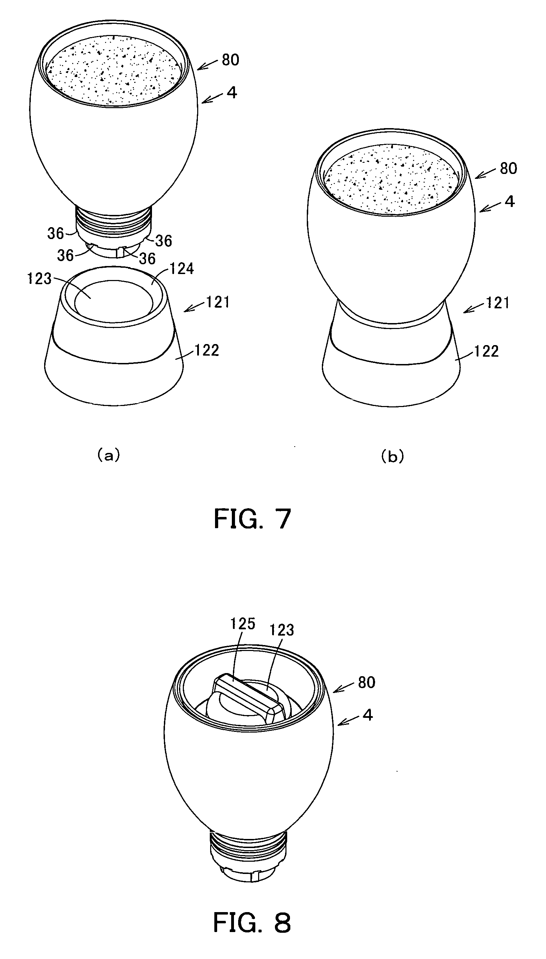

The drink extracting apparatus 1 includes, as shown in Fig. 7(a) and Fig. 7(b), a stand body 121 made of a synthetic resin having a truncated circular cone shape which supports the cup body 4 of the percolating cup 80 when brewing a drink material such as coffee grounds. This stand body 121 is disposed to be removably fitted upside down into the cup body 4 to cover the upper portion of the filter body 5 when keeping the cup body 4, etc., to which the filter body 5 is attached as shown in Fig. 8, and can be used as a cover for preventing dust adhesion to the filter body 5 inside the cup body 4.

The stand body 121 includes a truncated circular cone cylindrical portion 122 which has a truncated circular cone shape and whose upper and lower surfaces are open, and a bottomed cylindrical portion 123 which is provided integrally with the truncated circular cone cylindrical portion 122 and positioned on the inner side of the truncated circular cone cylindrical portion 122, and opens upward. On the upper end portion of the truncated circular cone cylindrical portion 122, a support surface 124 which supports the lower end side outer peripheral surface of the cup body 4 is formed in a truncated circular cone shape which becomes smaller in diameter downward. On the bottom surface of the bottomed cylindrical portion 123, as shown in Fig. 8, a finger-hook portion 125 long in a radial direction is formed. Then, as shown in Fig. 7(b), the lower end side of the cup body 4 is inserted into the bottomed cylindrical portion 123 of the stand body 121, and the lower end side outer peripheral surface of the cup body 4 is stably supported by the support surface 124.

Next, a usage, etc., of the drink extracting apparatus 1 will be described.

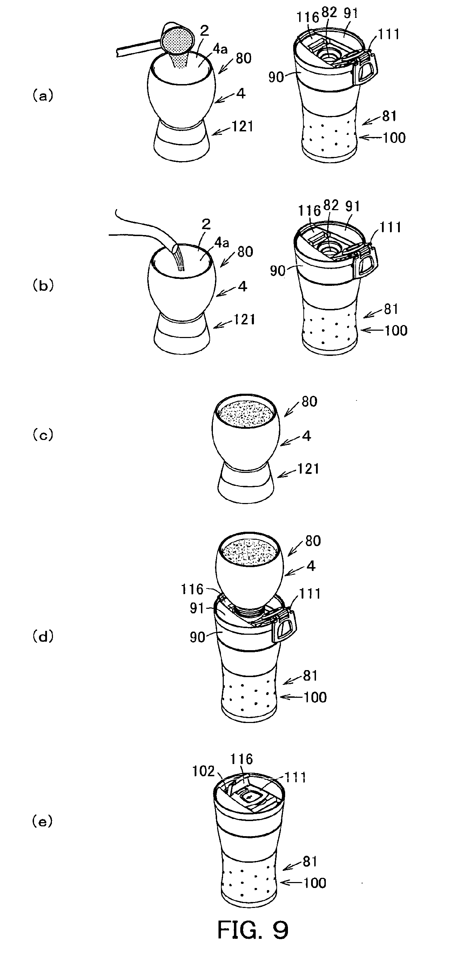

Making coffee as a drink by using the drink extracting apparatus 1 will be described with reference to Fig. 9.

As shown in Fig. 9(a), after the filter body 5 of the percolating cup 80 is placed on the filter support surface 30 of the annular plate 28 as the bottom plate 10 of the cup body 4, the filter body 5 is inserted into the cup member 7 from the lower surface opening 16 and the attachable and detachable member 8 is rotated in the fastening direction to attach the attachable and detachable member 8 to the cup member 7 by screwing, and accordingly, the filter body 5 is set on the cup body 4. Further, the lid member 91 is set on the cylindrical member 90 of the storing container 81, and the drink inlet 82 is opened and the drink outlet 102 is closed.

Then, the cup body 4 in which the filter body 5 is disposed inside the lower portion of the inner space 4a is placed on the stand body 121, and a desired amount of coffee grounds is put into the inner space 4a of the cup body 4.

Subsequently, as shown in Fig. 9(b), a desired amount of boiling water is poured into the inner space 4a of the cup body 4. In the case of iced coffee, cold water is poured instead of boiling water.

Then, as shown in Fig. 9(c), the coffee grounds are brewed for a desired time, for example, 4 minutes to percolate coffee. At this time, the lower opening 3 of the cup body 4 is closed by the valve body 61.

Next, as shown in Fig. 9(d), the cup body 4 is set on the storing container 81. In other words, the inner cylindrical portion 27 of the attachable and detachable member 8 of the cup body 4 is inserted between the cylindrical portion 105 and the inner cylindrical portion 106 of the lid member 91 of the storing container 81, and the lower surface of the outer cylindrical portion 26 of the attachable and detachable member 8 is placed on the upper surface of the storing container 81.

Then, the valve body 61 is pushed up against the urging force of the urging body 62 by the valve body push-up portion 108, and the lower opening 3 of the cup body 4 opens. In other words, only by placing the cup body 4 on the storing container 81, is the valve body 61 separated from the valve seat 29 and the lower opening 3 is opened.

Then, when the lower opening 3 of the cup body 4 opens, the coffee in the cup body 4 is discharged from the lower opening 3 through the filter body 5, and passes through the space 74 of the valve body 61 and the drink inlet 82 and flows into the storing container 81, and is stored in this storing container 81. The dregs of the coffee grounds are trapped by the filter body 5.

At this time, the inner cylindrical portion 27 of the attachable and detachable member 8 is connected to the lid member 91 of the storing container 81 so as not to come into direct contact with the air outside the cup body 4 while the outer peripheral side of the inner cylindrical portion 27 is covered by the outer cylindrical portion 26, so that tasty ingredients discharged from the lower opening 3 are not lost when they flow down inside the inner cylindrical portion 27 of the attachable and detachable member 8.

If necessary, the filter body 5 is returned again onto the stand body 121 and a desired amount of boiling water is poured therein, the coffee grounds are brewed, and then coffee is poured into the storing container 81 from the cup body 4.

Thereafter, as shown in Fig. 9(e), the drink inlet 82 of the storing container 81 is closed by the inlet lid 111 by turning the inlet lid 111, and on the other hand, the drink outlet 102 of the storing container 81 is opened by turning the outlet lid 116.

Then, the coffee is made to flow out of the drink outlet 102 and poured into a coffee cup not shown. The coffee may be directly drunk from the drink outlet 102. For example, when the coffee remains in the storing container 81, it may be preserved by closing both of the drink inlet 82 and the outlet lid 116.

To make coffee without using the stand body 121, in a state where an empty cup body 4 is set on the storing container 81, coffee grounds and boiling water are supplied sequentially into the cup body 4. The same operations as in the case of coffee are performed to make Japanese tea, Chinese tea, and black tea, etc.

After use, to clean the apparatus, after the drink material remaining inside the percolating cup 80 is disposed of, the percolating cup 80 is disassembled into the cup member 7, the filter body 5, the attachable and detachable member 8 holding the valve body 61 and the urging body 62, and the packing 51 and washed with water. In addition, the storing container 81 is disassembled into the container body 100, the lid member 91, and the packing 92 and washed with water.

Then, according to this drink extracting apparatus 1, the filter body 5 has an upward convex shape covering the upper side of the lower opening 3 of the cup body 4, so that the contact efficiency between the drink material "a" and the liquid is improved, and the extract of the drink can be sufficiently extracted from the drink material "a", and accordingly, a tasty drink such as coffee can be obtained.

Particularly, the cup body 4 has an inner wall face 17 having a substantially inverted truncated circular cone shape on the lower portion side, and the filter 5 has a filter surface 41 having a substantially truncated circular cone shape positioned to concentrically face the inner wall face 17, so that the boiling water flows along the inner wall face 17 which is a gentle curved slope and is concentrated on the lower portion central side of the cup body 4, and the pressure thereof is greatly applied to the drink material "a" and the flow is distributed uniformly throughout the entire drink material "a" in the cup body 4, so that the contact efficiency between the drink material and the liquid is further improved, and the extract of tasty ingredients, etc., of the drink can be sufficiently and effectively extracted from the drink material "a", and accordingly, a uniformly tasty drink such as uniformly tasty coffee can be obtained.

Only by attaching the attachable and detachable member 8 to the cup member 7, can the filter body 5 be easily and properly positioned and fixed inside the lower portion of the cup body 4, and only by detaching the attachable and detachable member 8 from the cup member 7, can the filter body 5 be easily taken out of the inside of the lower portion of the cup body 4.

Further, only by setting the cup body 5 on the storing container 81, is the valve body 61 moved up with respect to the cup body 4 by the valve body push-up portion 108 and the open state of the lower opening 3 can be maintained, and the drink discharged from the lower opening 3 being open can be supplied into the storing container 81 from the drink inlet 82.

The drink inlet 82 can be properly opened and closed by the inlet lid 111, while the drink outlet 102 can be properly opened and closed by the outlet lid 116, and for example, by closing the drink inlet 82 and opening the drink outlet 102, the drink can be directly drunk from the opened drink outlet 102.

Further, during brewing, etc., of the drink material, the cup body 4 can be stably supported by the stand body 121, and while keeping, by turning the stand body 121 upside down and housing it into the cup body 4, dust adhesion to the filter body 5 can be prevented.

Both of the cup body 4 and the storing container 81 have a double structure including a heat retaining mechanism, so that when brewing coffee grounds, when extracting coffee, and when preserving coffee, etc. , excessive heat radiation can be prevented, and reheating of a drink such as coffee can be reduced.

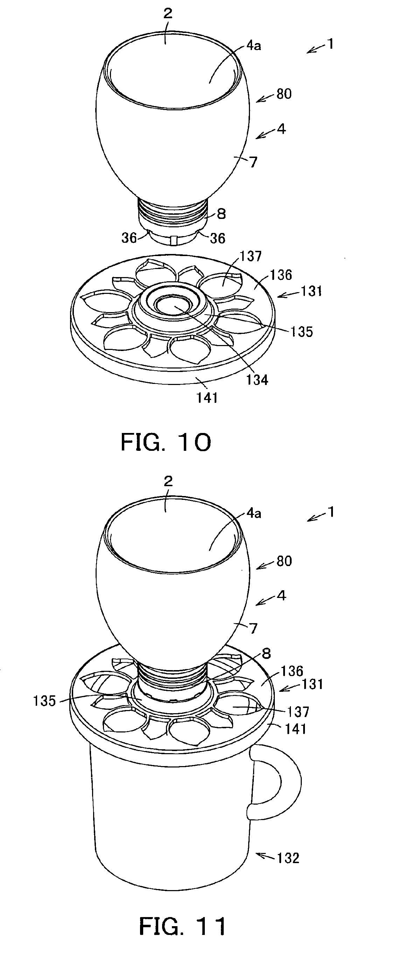

The above-described embodiment describes a case where a cup receiver on which the cup body 4 can be placed is the storing container 81, however, the cup receiver may be a receiving base 131 made of a synthetic resin shown in Fig. 10 to Fig. 12. This receiving base 131 is formed into a substantially plate shape which can be stably placed on the upper end portion of the drink container 132 such as a coffee cup.

Similar to the storing container 81, the receiving base 131 includes a valve body push-up portion 133 which maintains an open state of the lower opening 3 by moving up the valve body 61 with respect to the cup body 4 against the urging force of the urging body 62 in a state where the cup body 4 is placed and set on the upper surface of the receiving base, and a drink passing opening 134 through which the drink from the opened lower opening 3 passes.

In other words, the receiving base 131 has a substantially disk-shaped main body plate 136, and on the central portion of the main body plate 136, a central swelling portion 135 in a truncated circular cone shape swelling upward is formed, and in this central swelling portion 135, a circular drink passing opening 134 is formed. On the outer peripheral portion of the main body plate 136, a plurality of hole-like visible portions 137 through which the drink stored in the drink container 132 is visible from the outside of the storing container 81 are formed. From the outer peripheral end portion of the main body plate 136, a cylindrical portion 141 projects integrally downward.

On the central swelling portion 135 of the main body plate 136, from a portion facing the drink inlet 134, a cylindrical portion 138 whose upper and lower surfaces are open projects integrally downward. To the lower end portion inner peripheral surface of the cylindrical portion 138, an inner cylindrical portion 139 whose upper and lower surfaces are open is joined integrallyvia a plurality of plates 140. This inner cylindrical portion 139 forms a valve body push-up portion 133.

Then, when the inner cylindrical portion 27 of the attachable and detachable member 8 of the cup body 4 is inserted between the cylindrical portion 138 and the inner cylindrical portion 139 and fitted with play into the cylindrical portion 138, and the lower surface of the outer cylindrical portion 26 of the attachable and detachable member 8 is placed on the upper surface of the central swelling portion 135 of the main body plate 136, that is, on the upper surface of the receiving base 131, the valve body 61 is pushed up by the valve body push-up portion 133 and the lower opening 3 of the cup body 4 is opened. When the cup body 4 is lifted from the upper surface of the receiving base 131, the valve body 61 is moved down with respect to the cup body 4 by an urging force of the urging body 62, and this valve body 61 closes the lower opening 3.

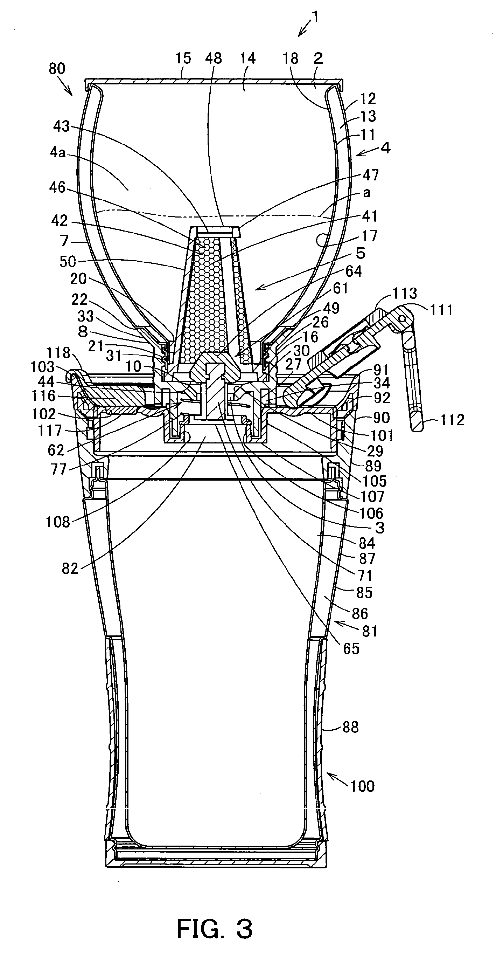

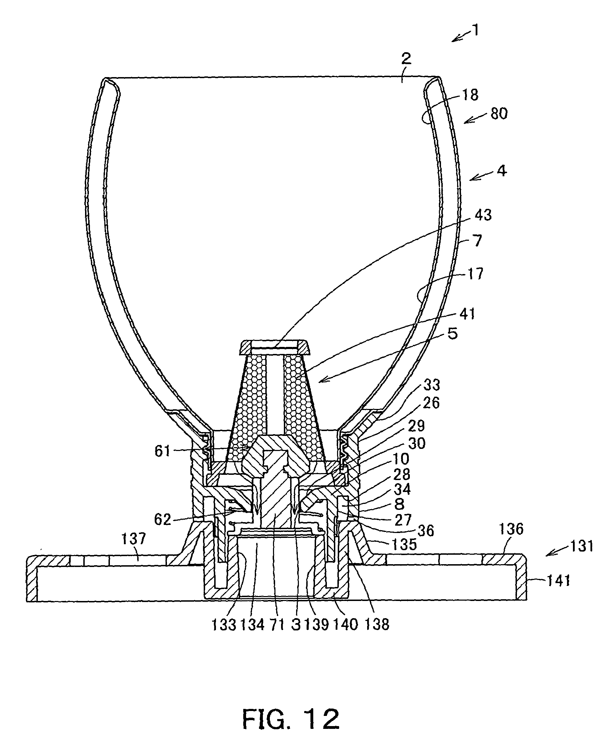

When this receiving base 131 is used, a drink such as coffee can be directly poured into the drink container 132 such as a coffee cup from the inside of the cup body 4, and this is convenient. The filter body 5 shown in Fig. 12 is lower in height from the bottom plate 10 of the cup body 4 than the filter body 5 shown in Fig. 3, etc.

In all embodiments, the filter surface 41 having a substantially cone shape is not limited to the substantially truncated circular cone shape, and it may be a substantially circular cone shape or a pyramid shape such as a four-sided pyramid or a six-sided pyramid which has an apex on the top, or may be a truncated pyramid shape, a spherical crown shape, or a semispherical shape, etc. The inner wall face 17 of the cup body 4 may have a substantially inverted truncated pyramid shape, or instead of the substantially inverted cone shape, may be a cylindrical shape having even diameters from the upper end to the lower end.

The cup member 7 is not limited to the double structure having the space 13, and may be a single structure when it is made of a heat insulating material.

Further, the components of the drink extracting apparatus 1 such as the cup member 7, the attachable and detachable member 8, the mesh member 46, the mesh holding member 47, the valve member 64, and the valve holding member 65, etc., are made of anymaterialofametal, synthetic resin, rubber, ceramic, enamel, glass, etc.

The drink extracting apparatus 1 maybe constructed so that, for example, the filter body 5 is removably fitted to the inner peripheral side of the lower opening 3 of the cup body 4 or fixed to the inner peripheral side of the lower opening 3 of the cup body 4.

Further, to make it possible to select a filter body according to the size of a drink material such as coffee grounds, a plurality of types of filter bodies 5 having different mesh sizes may be prepared in advance.

### INDUSTRIAL APPLICABILITY

The present invention is used for obtaining a drink such as tasty coffee, Japanese tea, Chinese tea, and black tea, etc. , from a drink material such as coffee grounds or tea leaves.

## Claims

1. A drink extracting apparatus comprising:
a cup body having an upper opening for supplying a drink material and a liquid and a lower opening for discharging a drink obtained by being extracted from the drink material; and
a filter body being convex upward which is disposed inside the cup body and covers the upper side of the lower opening, and traps the drink material and allows the drink to pass through.

2. The drink extracting apparatus according to Claim 1, wherein
the cup body has an inner wall face which has a substantially inverted cone shape, and
the filter body has a filter surface having a substantially cone shape which faces the inner wall face and whose central axis line matches the central axis line of the inner wall face.

3. The drink extracting apparatus according to Claim 1 or 2, wherein
the cup body includes a cup member and an attachable and detachable member attachable to and detachable from the cup member, and
by attaching the attachable and detachable member to the cup member, the filter body is positioned and fixed inside the cup body, and
by detaching the attachable and detachable member from the cup body, the filter body is taken out of the inside of the cup body.

4. The drink extracting apparatus according to any one of Claims 1 to 3, comprising:
a valve body which opens the lower opening by moving up with respect to the cup body and closes the lower opening by moving down with respect to the cup body; and
an urging body which urges this valve body downward.

5. The drink extracting apparatus according to Claim 4, comprising:
a cup receiver on which the cup body is set, wherein the cup receiver includes:
a valve body push-up portion which holds an open state of the lower opening by moving up the valve body against the urging force of the urging body when the cup body is set; and
a drink passing opening through which the drink from the lower opening passes.

6. The drink extracting apparatus according to Claim 5, wherein
the cup receiver is a storing container which receives a drink from the lower opening of the cup body through the drink passing opening and stores it.

7. The drink extracting apparatus according to Claim 6, wherein the storing container includes:
a drink inlet as the drink passing opening;
an inlet lid which opens and closes this drink inlet;
a drink outlet; and
an outlet lid which opens and closes this drink outlet.

8. The drink extracting apparatus according to Claim 5, wherein
the cup receiver is a receiving base which can be placed on a drink container, and
when the receiving base is placed on the drink container and the cup body is set onto the placed receiving base, the drink from the lower opening of the cup body flows into the drink container through the drink passing opening.

9. The drink extracting apparatus according to any one of Claims 1 to 8, comprising:
a stand body for supporting the cup body, wherein
the stand body can be used as a cover for preventing dust adhesion to the filter body while keeping.
